Europäisches Patentamt

**European Patent Office**

Office européen des brevets

(19)

(11) Veröffentlichungsnummer: **0 032 381**
**B1**

(12) **EUROPÄISCHE PATENTSCHRIFT**

(45) Veröffentlichungstag der Patentschrift:
15.06.83

(51) Int. Cl.³: **F 24 J 3/04**

(21) Anmeldenummer: 81100074.4

(22) Anmeldetag: 08.01.81

(54) Aufnahmestation für Umweltenergie.

(30) Priorität: 10.01.80 DE 3000684

(43) Veröffentlichungstag der Anmeldung:
22.07.81 Patentblatt 81/29

(45) Bekanntmachung des Hinweises auf die Patenterteilung:
15.06.83 Patentblatt 83/24

(84) Benannte Vertragsstaaten:
**AT BE CH FR IT LI NL**

(56) Entgegenhaltungen:
**EP-A-0 002 839**
**DE-A-2 443 029**
**DE-A-2 619 744**
**FR-A-2 418 425**

(73) Patentinhaber: **Grammer, Meinrad, Geigerweg 4,
D-7407 Rottenburg 15-Ergenzingen (DE)**

(72) Erfinder: **Grammer, Meinrad, Geigerweg 4,
D-7407 Rottenburg 15-Ergenzingen (DE)**
Erfinder: **Grammer, Alois, Enzianstrasse 3,
D-7407 Rottenburg 15-Ergenzingen (DE)**

(74) Vertreter: **Möbus, Rudolf, Dipl.-Ing.,
Hindenburgstrasse 65, D-7410 Reutlingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Aufnahmestation für Umweltenergie

Die Erfindung betrifft eine Aufnahmestation für Umweltenergie, mit einem gesondert aufstellbaren Gehäuse, dessen Außenwandung als Vorrichtung zur Aufnahme von Sonnenenergie und von in der Luft und im Regen enthaltener Wärmeenergie ausgebildet ist und das im Innern eine Wärmepumpe und einen Energiespeicher aufweist sowie mit Verbindungsanschlüssen für Energieleitungen zu mindestens einem außerhalb der Aufnahmestation befindlichen Energieverbraucher versehen ist.

Eine Aufnahmestation mit den vorstehend genannten Merkmalen ist aus der FR-A-2 418 425 bekannt. Eine optimale Ausnutzung der Umweltenergie ist mit dieser bekannten Aufnahmestation aber noch nicht möglich. Hierzu sind Zusatzaggregate auch an sich bekannter Art erforderlich, die dann in ein zu beheizendes Gebäude eingebaut werden müßten. Dabei würden sich dann aber wieder die Nachteile eines nachträglichen Einbaus in Gebäuden ergeben, nämlich Durchbrüche im Gebäude, lange Rohrleitungswege und Steuerleitungen zum Verbinden der einzelnen Anlagevorrichtungen miteinander. Diese Installationsschwierigkeiten sollen aber durch gesonderte Aufnahmestationen gerade beseitigt werden. Demgemäß liegt der Erfindung die Aufgabe zugrunde, eine gesondert von einem zu beheizenden Gebäude anordenbare Aufnahmestation so auszubilden, daß sie eine optimale Ausnutzung der Umweltenergie und eine Anpassung an die jeweiligen Umweltverhältnisse gestattet.

Die gestellte Aufgabe wird mit einer Aufnahmestation der eingangs genannten Art erfindungsgemäß dadurch gelöst, daß das vorgefertigte Gehäuse zusätzlich alle · Verteilungs-, Regel- oder Steuerungs- und Sicherheitseinrichtungen für die Vorrichtungen zur Aufnahme, Speicherung und Weiterleitung der Umweltenergie aufweist und diese Vorrichtungen zusätzlich mindestens einen Energieumsetzer in Form einer Zusatzheizeinrichtung aufweisen, die mit gasförmigem, flüssigem oder festem Brennstoff oder elektrisch betrieben ist, gegebenenfalls aus ebenfalls im Gehäuse untergebrachten Vorratsbehältern. Sie kann zusätzlich einen Windgenerator und/oder einen Regenwasserspeicher aufweisen. Vorteilhafterweise kann das vorgefertigte Gehäuse in mehrere Einzelkammern, Einzelgehäuse oder Etagen gegliedert sein. Beispielsweise kann das vorgefertigte Gehäuse in einen durch einen in das Erdreich einbettbaren Speicherbehälter gebildeten Basisteil, einen anschließenden Verteilerraum, eine die Energieumsetzer, Verteiler, Steuerungseinrichtungen und Zusatzheizeinrichtungen aufweisende Etage und eine einen Wasserspeicher und eine Luftumwälzvorrichtung aufweisende Dachetage gegliedert sein.

Die erfindungsgemäß ausgebildete Aufnahmestation für Umweltenergie weist also nicht nur die für den Entzug der Umweltenergie erforderlichen Vorrichtungen, sondern auch noch alle zusätzlichen Einrichtungen auf, die erforderlich sind, um die Umweltenergie in ein bestehendes Heizungssystem eines Gebäudes als vollwirksamen Bestandteil, nicht nur als im Sommer einsetzbares Zusatzaggregat, einzubringen. Durch ihre Zusatzheizeinrichtung wird sie erst sinnvoll für unsere Breiten. Durch die Unterbringung der Zusatzheizung in der Aufnahmestation wird die Sicherheit eines von der Aufnahmestation mit Energie versorgten Gebäudes erhöht. Die Aufnahmestation läßt sich in einem Herstellerwerk vorfertigen, wobei sich die Gehäuseform an die geographische Lage des Aufstellungsortes, an am Aufstellungsort übliche Gebäudeformen oder an den Untergrund der Aufnahmestation, beispielsweise an Gartengelände oder eine Gebäudeabschlußfläche anpassen läßt. Die erfindungsgemäß ausgebildete Aufnahmestation läßt sich im Baukastenprinzip zusammensetzen und damit auch an einen unterschiedlich umfangreichen Einsatz von energiesparender Technik anpassen. Die Aufnahmestation, die zweckmäßig mindestens mit ihren oberen Gehäuseteilen drehbar und damit der Sonne nachführbar angeordnet sein kann, erlaubt also das Zusammenfassen aller zur rationellen Umweltenergiegewinnung und zu ihrer Umsetzung und Weiterleitung erforderlichen Anlageteile zu einer kompakten Einheit. Sie läßt sich anschlußfertig anliefern und macht bei einer bevorzugten getrennten Anordnung neben einem zu versorgenden Gebäude oder einem anderen Verbraucher lediglich einen zu dem Gebäude oder Verbraucher führenden Anschlußstrang aus Rohrleitungen und/oder elektrischen Leitungen erforderlich. Dabei kann eine Energievorverteilung auf einzelne Gebäudebereiche bereits in der Aufnahmestation vorgenommen werden. Veränderungen am Gebäude entfallen praktisch vollständig. Der Einsatz mehrerer Handwerkszweige und die damit verbundenen Koordinationsschwierigkeiten entfallen ebenfalls weitgehend.

Ein weiterer wichtiger Vorteil der erfindungsgemäß ausgebildeten Aufnahmestation liegt darin, daß in ihr sämtliche Anlagenteile dicht beieinander angeordnet sind, so daß sich beispielsweise Versorgungspumpen und Steuer- oder Regeleinrichtungen optimal auslegen lassen. Auch läßt sich so ein hoher Wirkungsgrad der ganzen Energiegewinnungseinrichtung gewährleisten. Bei einer späteren Umrüstung auf neue Technologien oder dem Austausch einzelner Einrichtungteile bleibt der Montageaufwand in Grenzen, da lediglich eine Umstellung innerhalb der Aufnahmestation erforderlich ist, deren Grundaufbau montagefreundlich und auch im Baukastensystem erweiterungsfähig gestaltet ist. Durch die Unterbringung von Zusatzheizquellen in der Aufnahmestation wird die Sicherheit des versorgten Gebäudes erhöht. Dies gilt insbesondere bei gasbetriebenen Zusatzheizeinrichtungen, wo immer die Gefahr eines Gasaustritts besteht.

Die ganze Aufnahmestation läßt sich nach der Vorfertigung und vor ihrer Aufstellung und ihrem Anschluß an ein oder mehrere Verbraucher durchprüfen und einregulieren.

Nachfolgend wird ein Ausführungsbeispiel einer erfindungsgemäß ausgebildeten Aufnahmestation in Verbindung mit der Zeichnung näher beschrieben.

Im einzelnen zeigt

Fig. 1 einen schematischen Längsschnitt durch die Aufnahmestation,

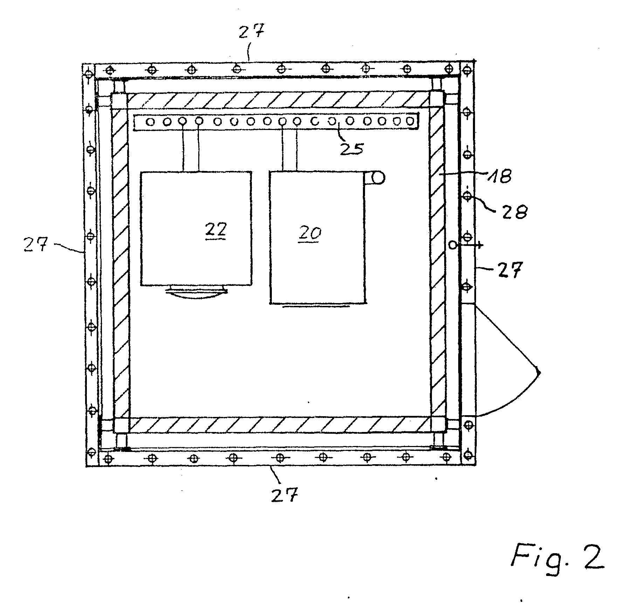

Fig. 2 einen schematischen Querschnitt durch die Aufnahmestation entlang der Linie II-II in Fig. 1.

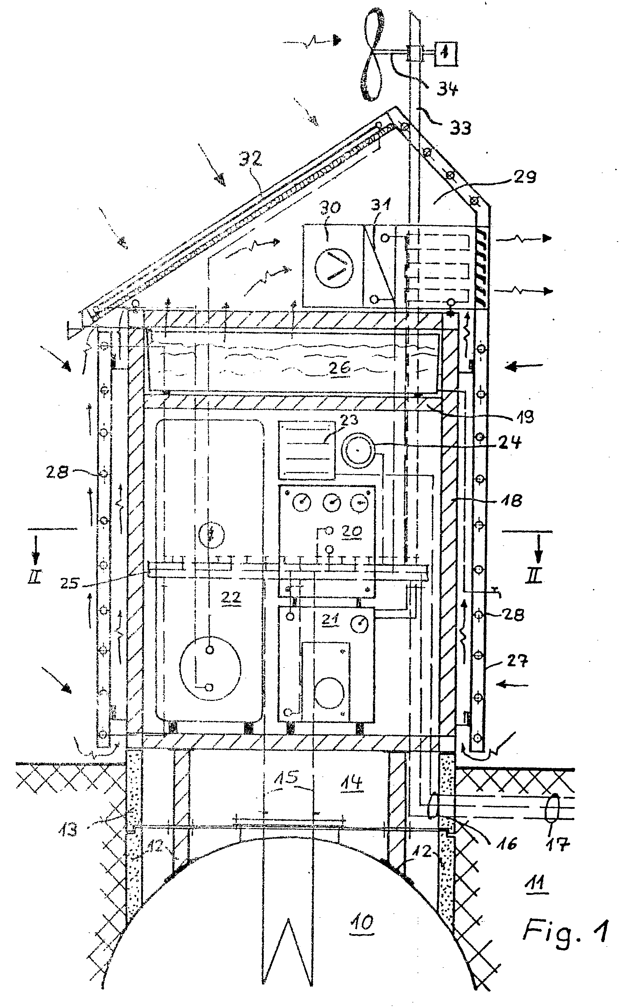

Die in Fig. 1 dargestellte installierte Aufnahmestation für Umweltenergie besteht aus einem vorgefertigten mehrteiligen Gehäuse. Der Basisteil des Gehäuses besteht aus einem kugelförmigen Speicherbehälter 10, der in eine ausgehobene Grube einsetzbar und mit Anschlußwandungen 12 versehen ist und der so das Fundament für die übrigen Gehäuseteile bildet. Der nächste, auf die Anschlußwandungen 12 aufgesetzte Gehäuseteil 13 umschließt einen Anschlußraum 14, in welchem Anschlußleitungen 15 zum Speicherbehälter 10 und die Verbindungsanschlüsse 16 für von der Aufnahmestation zu einem nicht dargestellten Gebäude geführte und im Erdreich verlegte Anschlußleitungen 17 untergebracht sind. Beim dargestellten Ausführungsbeispiel ist der Gehäuseteil 13 auch noch weitgehend im Erdreich 11 eingebettet.

Über dem Gehäuseteil 13 erhebt sich ein Hauptgehäuseteil 18, der durch Querwandungen, wie die Wandung 19, in mehrere Kammern unterteilt sein kann. Im Hauptgehäuseteil 18 sind beim dargestellten Ausführungsbeispiel eine Wärmepumpe 20, ein Energieumsetzer 21 und ein Speicherbehälter 22 untergebracht und an passend bemessenen, austauschbaren Gestellteilen verankert. Im Hauptgehäuseteil 18 sind außerdem die Regel- und Steuereinrichtungen 23, eine Sicherungseinrichtung 24 und Verteilerelemente 25 mit nicht dargestellten Armaturen und Pumpen untergebracht. In dem durch die Querwandung 19 abgeteilten oberen Bereich ist ein Regenwasserspeicher 26 untergebracht, der nach oben offen ist, so daß das darin gespeicherte Wasser verdunsten kann.

Der Hauptgehäuseteil 18 der dargestellten Aufnahmestation hat einen annähernd quadratischen Querschnitt. Die Aufnahmestation kann aber auch mit einem beliebigen anderen Querschnitt, beispielsweise dreieckig oder rechteckig, gefertigt sein. Ihrer Außenwandung sind auf allen vier Außenseiten mit Abstand Wärmeaufnahmeelemente 27 vorgehängt. Durch diese Wärmeaufnahmeelemente 27 kann die Außenluft hindurchströmen, wie durch die in Fig. 1 eingezeichneten Pfeile angedeutet ist, und ihre Wärme an den Rohren 28 abgeben. Eine Luftbewegung an den Wärmetauschern 27 wird durch ein umschaltbares und im Dachraum 29 untergebrachtes Gebläse 30 begünstigt. Dem Gebläse 30 ist ein Verdampferteil 31 nachgeschaltet, in welchem der Luft ebenfalls Wärme entzogen werden kann.

Die schrägen Dachflächen der Aufnahmestation sind weitgehend mit Sonnenkollektoren 32 in Form von flüssigkeitsdurchflossenen Absorberplatten oder in Form von optisch/elektrischen Wandlern bedeckt. Über dem Dach ist an einem aus dem Dach herausgeführten Abgasrohr 33 ein Windgenerator 34 gelagert. In und an der Aufnahmestation sind also verschiedene Vorrichtungen für die Entnahme von Umweltenergie untergebracht und über kurze Verbindungswege mit zugehörigen Speicher-, Steuer- oder Regel- und Verteilereinrichtungen verbunden. Größe und Ausstattung der Aufnahmestation lassen sich zweckmäßig nach dem Baukastenprinzip variieren. Der Speicherbehälter 10 kann entweder als Speicherbehälter für wärmespeichernde Flüssigkeit oder aber als Brennstofftank für eine in der Aufnahmestation untergebrachte Zusatzheizung, ein Dieselaggregat oder dergleichen Verwendung finden.

## Patentansprüche

1. Aufnahmestation für Umweltenergie, mit einem gesondert aufstellbaren Gehäuse, dessen Außenwandung als Vorrichtung (28, 32) zur Aufnahme von Sonnenenergie und von in der Luft und im Regen enthaltener Wärmeenergie ausgebildet ist und das im Innern eine Wärmepumpe (20) und einen Energiespeicher (22) aufweist sowie mit Verbindungsanschlüssen (16) für Energieleitungen (17) zu mindestens einem außerhalb der Aufnahmestation befindlichen Energieverbraucher versehen ist, dadurch gekennzeichnet, daß das vorgefertigte Gehäuse zusätzlich alle Verteilungs-, Regel- oder Steuerungs- und Sicherheitseinrichtungen (23, 24, 25) für die Vorrichtungen zur Aufnahme, Speicherung und Weiterleitung der Umweltenergie aufweist und diese Vorrichtungen zusätzlich mindestens einen Energieumsetzer (21) in Form einer Zusatzheizeinrichtung aufweisen, die mit gasförmigem, flüssigem oder festem Brennstoff oder elektrisch betrieben ist, gegebenenfalls aus ebenfalls im Gehäuse untergebrachten Vorratsbehältern (10).

2. Aufnahmestation nach Anspruch 1, dadurch gekennzeichnet, daß sie zusätzlich einen Windgenerator (34) und/oder einen Regenwasserspeicher (26) aufweist.

3. Aufnahmestation nach Anspruch 1 und 2, dadurch gekennzeichnet, daß ihr vorgefertigtes Gehäuse in mehrere Einzelkammern, Einzelgehäuse (10, 13, 18) oder Etagen gegliedert ist.

4. Aufnahmestation nach Anspruch 3, dadurch gekennzeichnet, daß das vorgefertigte Gehäuse in einen durch einen beispielsweise in das Erdreich (11) einbettbaren Speicherbehälter (10) gebildeten Basisteil, einen anschließenden Verteilerraum (14), eine die Energieumsetzer, Verteiler, Steuerungseinrichtungen und Zusatzheizeinrichtungen aufweisende Etage (Gehäusehauptteil 18) und eine einen Wasserspeicher (26) und eine Luftumwälzvorrichtung (30) aufweisende Dachetage (29) gegliedert ist.

5. Aufnahmestation nach einem der Ansprüche 1—4, dadurch gekennzeichnet, daß sie zusätzliche Verbindungsanschlüsse für im Erdreich verlegbare und/oder ins Grundwasser reichende Rohrleitungen eines Wärmepumpenaggregats (20) aufweist.

6. Aufnahmestation nach einem der Ansprüche 1—5, dadurch gekennzeichnet, daß das vorgefertigte Gehäuse mindestens zum Teil drehbar gelagert ist.

## Claims

1. Absorption plant for environmental energy with a separately installable housing whose outer wall is designed as a device (28, 32) for absorption of solar energy and of thermal energy contained in the air and in rain and inside which there is a heat pump (20) and an energy storage device (22) and is provided with connections (16) for power lines (17) to at least one power consumer located outside the absorption plant, characterized by the fact that the fabricated housing additionally incorporates all distribution, regulation or control and safety devices (23, 24, 25) for the devices for absorption, storage and transmission of the environmental energy and these devices additionally have at least one energy converter (21) in the form of an additional heating device which is operated with gaseous, liquid or solid fuel or electrically, where applicable from storage containers (10) also accommodated in the housing.

2. Absorption plant as claimed in claim 1, characterized by the fact that it additionally incorporates a winddriven generator (34) and/or a rain water storage device (26).

3. Absorption plant as claimed in claims 1 and 2, characterized by the fact that its fabricated housing is divided into several separate chambers, separate housings (10, 13, 18) or levels.

4. Absorption plant as claimed in claim 3, characterized by the fact that the fabricated housing is divided into a base section formed for example by a storage container (10) which can be embedded in the ground (11), an adjacent distribution compartment (14), a level (housing main section 18) accommodating the energy converter, distributor, control devices and additional heating devices, and a roof level (29) accommodating a water storage device (26) and an air circulation device (30).

5. Absorption plant as claimed in one of the claims 1 to 4, characterized by the fact that it incorporates additional connections for pipelines of a heat pump set (20) which can be laid in the ground and/or extend into the ground water.

6. Absorption plant as claimed in one of the claims 1 to 5, characterized by the fact that the fabricated housing is mounted so as to be at least partially rotatable.

## Revendications

1. Station de captage d'énergie ambiante comprenant un abri établi séparément dont l'enceinte externe est conformée comme un moyen (28, 32) pour recueillir l'énergie solaire et l'énergie thermique contenue dans l'air et la pluie et qui comprend à l'intérieur une pompe de chaleur (20) et un moyen pour accumuler l'énergie (22) et qui est muni également de connexions (16) pour des moyens de liaison convoyant l'énergie (17) vers au moins une installation consommant l'énergie située à l'extérieur de la station de captage, caractérisée en ce que l'abri préfabriqué comprend supplémentairement tous les dispositifs de commande et de réglage, de sûreté et de distribution (23, 24, 25) pour les moyens recueillant, accumulant et convoyant l'énergie ambiante et ces moyens comprennent supplémentairement au moins un convertisseur d'énergie (21) sous la forme d'une installation de chauffage d'appoint qui fonctionne avec un combustible gazeux, liquide ou solide, le cas échéant provenant d'un réceptable de stockage (10) logé également dans l'abri.

2. Station de captage selon la revendication 1, caractérisée en ce qu'elle comprend supplémentairement un générateur éolien (34) et/ou un récupérateur d'eaux de pluie (26).

3. Station de captage selon la revendication 1 ou 2, caractérisée en ce que son abri préfabriqué est divisé en plusieurs chambres individuelles, enceintes individuelles (10, 13, 18) ou étages.

4. Station de captage selon la revendication 3, caractérisée en ce que l'abri préfabriqué est divisé en une base formée d'un réceptacle de stockage (10) par exemple encastré dans la terre (11), un espace de distribution contigu (14), un étage (partie principale 18 de l'abri) comprenant le convertisseur d'énergie, le dispositif de distribution, les dispositifs de commande et l'installation de chauffage d'appoint, et un étage sous toiture (29) comprenant un récupérateur d'eau et un dispositif de ventilation d'air (30).

5. Station de captage selon l'une des revendications 1 à 4, caractérisée en ce qu'elle comprend des connexions supplémentaires à des conduites tubulaires d'un groupe à pompe de chaleur (20) encastrables dans la terre et/ou passant dans les eaux souterraines.

6. Station de captage selon l'une des revendications 1 à 5, caractérisée en ce que l'abri préfabriqué est monté tournant au moins en partie.

Fig. 1

Fig. 2